# EUROPÄISCHE PATENTSCHRIFT

(11) **EP 2 108 497 B1**
(45) Veröffentlichungstag und Bekanntmachung des Hinweises auf die Patenterteilung: **04.12.2013**
(21) Anmeldenummer: 09155001.2
(22) Anmeldetag: 12.03.2009
(51) Int. Cl.: B29C 41/08, B29C 70/30, B29B 11/16, B05D 1/16

(54) **Herstellung von einem Halbzeug aus Flocken**
Manufacture of a preform made of flakes
Fabrication d'une préforme faite de particules

(30) Priorität: 12.03.2008 DE 102008013808
(43) Veröffentlichungstag der Anmeldung: 14.10.2009
(73) Patentinhaber: HP Pelzer Holding GmbH, 58454 Witten (DE)
(72) Erfinder: Döhring, Olaf, 45665 Recklinghausen (DE); Piatkowski, Reimund, 44143 Dortmund (DE); Doris, Colm, Waterford (IE); Nicolai, Norbert, Dr., 46514 Schermbeck (DE); Temme, Frank, 44357 Dortmund (DE)
(74) Vertreter: von Kreisler Selting Werner

(56) Entgegenhaltungen:
- WO-A1-98/30371
- WO-A1-2005/016619
- AT-B- 201 008
- DE-A1- 3 625 818
- DE-A1- 4 430 961
- US-A- 5 376 327

## Beschreibung

Die Erfindung betrifft ein Verfahren zur Herstellung von Halbzeugen, Formteilen oder Bauteilen aus Flocken.

Der Begriff "Flocken" im Sinne der vorliegenden Erfindung umfasst Naturfasern, Kunstfasern und Schaumstoffflocken, insbesondere aus PU sowie im Fahrzeugbau eingesetzte körnige, granulierte oder pulverförmige Komponenten, die gegebenenfalls in kleinen Aggregaten vorliegen.

IR 11-61403 und IR 11-61402 beschreiben die Herstellung von Vliesmatten aus Flocken, wobei die Flocken in der Beflockungsstation der Schwerkraft folgend auf ein Flockwerkzeug aufgebracht werden.

DE 69701148 T2 beschreibt die Herstellung von Vliesmatten aus Flocken, wobei die Beflockungsstation zum Einfüllen der Flocken geöffnet werden muss und die Flocken der Schwerkraft folgend in die Beflockungsstation ein gefüllt werden.

DE 10324735 B3 beschreibt die Herstellung von Vliesmatten aus Schaumflocken, wobei die Flocken in die Beflockungsstation quer zur Schwerkraft eingebracht werden.
(Desweiteren kann die Pelzer-Patentschrift EP 0 909 619 B1 als Stand der Technik angeführt werden.)

DE 44 30 961 A1 **betrifft ein Verfahren zur Herstellung eines Dämmelements aus einem Bindemittel und einem Matrixwerkstoff. Bei der Herstellung werden Flocken und Bindemittel in einem Luftstrom entgegen der Schwerkraft eingetragen.**

AT 201 008 B **offenbart ein Verfahren zur Herstellung einer angesammelten Faserschicht, wobei man Naturfasern oder Kunstfasern auf gegebenenfalls Klebemittel in einen Luftstrom einträgt.**

Diese bekannten Verfahren haben den Nachteil, dass die Schwerkraft auf die Flocken je nach Flugbahn die Schwerkraft sehr unterschiedlich wirkt und so die Flocken am Flockwerkzeug unregelmäßig abgeschieden werden. Die Flocken werden bei den hier bekannten Verfahren bei relativ geringen Strömungsgeschwindigkeiten in die Form gefüllt. Die Ablage der Flocken wird beim Fallen, insbesondere bei höheren Fallstrecken daher sehr stark von deren Form, Größe und den lokalen Strömungsbedingungen im Füllschacht beeinflusst.

Der Nachteil beim seitlichen Füllen liegt im Grunde in der Komplexität der hierzu erforderlichen Werkzeugtechnik. Aufgrund der geringen Bauhöhe der Werkzeuge müssen Flocken durch zahlreiche Einblasskanäle seitlich eingeführt werden (hoher Steuerungsaufwand).

Die Aufgabe der vorliegenden Erfindung besteht also darin, ein Verfahren bereitzustellen, mit dem **Formteile aus Halbzeugen** aus verdichteten und gebundenen Flocken mit höchstmöglicher Kontrolle möglichst einfach und dennoch gut steuerbar hergestellt werden können.

In einer ersten Ausführungsform wird die der Erfindung zu Grunde liegende Aufgabe gelöst durch ein Verfahren zur Herstellung von **Formteilen aus** einem Halbzeug wobei man Flocken und Binder in einem Luftstrom entgegen der Schwerkraft in einen Abscheideraum einträgt und an einem luftdurchlässigen dreidimensionalen Flockwerkzeug abscheidet, wobei hinter dem Flockwerkzeug ein niedrigerer, räumlich und/oder zeitlich variierbarer Luftdruck als vor dem Flockwerkzeug herrscht, der räumlich und/oder zeitlich variiert werden kann, **wobei der niedrigere Luftdruck saugseitig durch hinter dem Werkzeug anliegenden Unterdruck erzeugt wird,**
**wobei man in einem nachfolgenden zweiten Schritt Heißluft in den Abscheideraum einlässt, um den Binder zu aktivieren, und so das Halbzeug zumindest teilverfestigt und**
**das Halbzeug in einem anschließenden Schritt in ein dampf-/vakuumfähiges Werkzeug überführt, dieses anschließend luftentleert, anschließend den Binder durch Einleitung von Sattdampf aktiviert, und daran anschließend zur Abkühlung des Halbzeugs Vakuum gezogen wird, wobei zu jedem Zeitpunkt das Werkzeug mindestens die Temperatur des Sattdampfes aufweist.**

Entsprechend einer vliestechnischen Produktion werden entsprechend beispielsweise zunächst Fasern und PU-Schaumflocken und/oder andere körnige, oder auch pulverförmige Komponenten durch entsprechende Maschinentechnik wie beispielsweise Ballenöffner, Feinöffner, Mischkammern und Streuvorrichtungen in einem Luftstrom dosiert. Fasern im Sinne der vorliegenden Erfindung umfassen beispielsweise Naturfaser, beispielsweise aus Reißbaumwolle oder anderen Pflanzenfasern. Die PU-Schaumstoffflocken im Sinne der vorliegenden Erfindung umfassen Schaumstoffe aus Polyurethan. Diese Materialien lassen sich besonders einfach mit verschiedenen Eigenschaften ausrüsten und sind daher für das erfindungsgemäße Verfahren besonders gut geeignet. Diese werden beispielsweise geöffnet sowie intensiv vermischt, und dabei höchstmöglich zu kleineren Aggregaten (also Flocken) vereinzelt. Die Förderung zwischen den einzelnen Anlagenteilen erfolgt beispielsweise mittels eines Förderluftstroms über Materiallüfter in Rohrleitungen. Vor jeder Prozessstufe wird das flockenförmige Material beispielsweise durch einen sogenannten Condenser aus dem Förderluftstrom abgeschieden. Dann wird es beispielsweise durch Schwerkraft oder mechanische Förderung in einem Rüttelschacht und/oder einem Förderband der folgenden Öffnerstufe zugeführt.

Die fein vereinzelten Flocken werden beispielsweise diskontinuierlich von der letzten Feinöffnerstufe in einem Luftstrom abgezogen und anschließend in den Hauptförderluftstrom bei größerem Querschnitt, zentriert eingeblasen. Der Hauptförderstrom mündet beispielsweise über einen Trichter in die Unterseite eines durchströmten Abscheideraums, der sogenannten Flockbox, dessen oberer Abschluss das poröse Flock-Werkzeug bildet. Oberhalb des Werkzeuges wird beispielsweise durch den gleichen Lüfter, der auf der Druckseite den Hauptförderstrom erzeugt, saugseitig ein Unterdruck hinter dem Flockwerkzeug angelegt. Es handelt sich also beispielsweise um einen Luftkreislauf. Das Flockwerkzeug ist erfindungsgemäß als 3-D Lochblechwerkzeug, -Gitter oder -Gewebe bzw. mittels ähnlicher poröser Materialien ausgeführt.

Die im Förderstrom verteilten Flocken werden am Flockwerkzeug abgeschieden (nach dem Filter-Prinzip), und sowohl durch den hinter dem Werkzeug anliegenden Unterdruck als auch durch den mechanischen Zusammenhalt der gebildeten Vliesmatte und der Haftung derselben in den Poren, Löchern oder Bohrungen des Werkzeugs entgegen der Schwerkraft in Position gehalten.

Die Abscheidung und Verteilung des Flocken-Faser-Materials am Werkzeug wird beispielsweise dadurch erreicht, dass durch verschiedene strömungstechnische Maßnahmen am Werkzeug unterschiedlich viel Material aus dem Luftstrom abgeschieden werden kann.

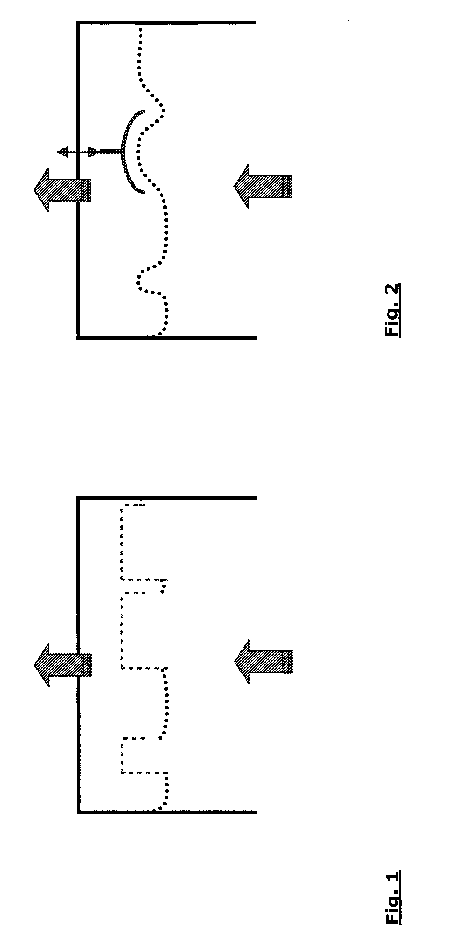

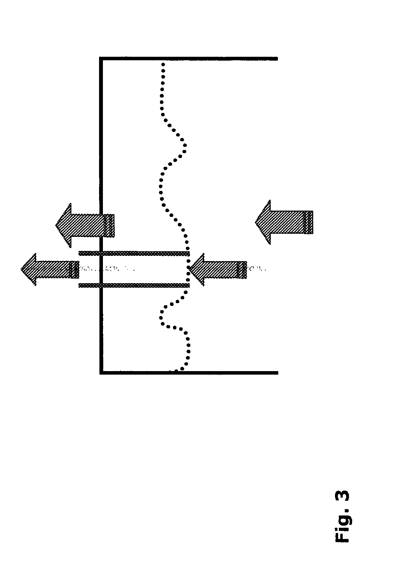

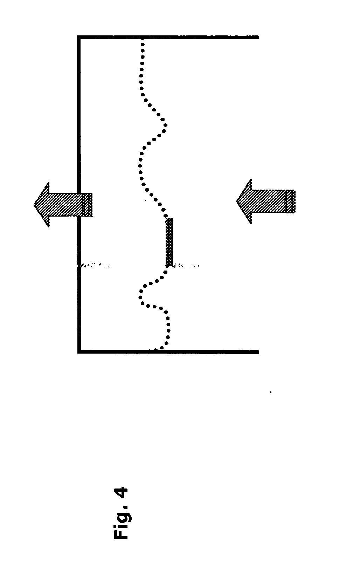

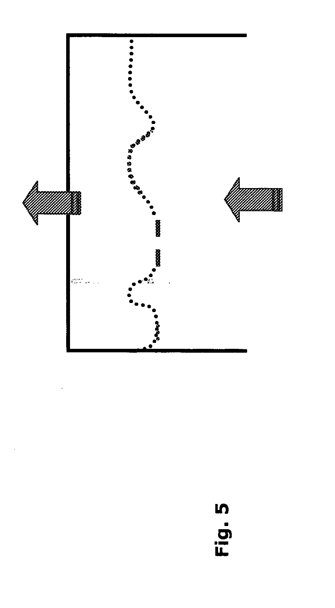

Der Aufbau der Vliesmatte kann beispielsweise in seiner Dicke oder auch in einzelnen Segmenten des Halbzeugs hierbei großflächig über folgende Maßnahmen gesteuert werden:
- Dauer der diskontinuierlichen Zufuhr von Flocken in den Hauptförderluftstrom,
- Erhöhen des Unterdrucks oberhalb des Flock-Werkzeugs,
oder beispielsweise lokal durch folgende Maßnahmen gesteuert werden:
- Anpassung der Konturtiefe des Werkzeuges (Überhöhung), da in tiefen Auswölbungen mehr Material abgeschieden werden kann (Fig. 1),
- Teilzeitiger oder vollzeitiger Einsatz von Drosselklappen während des Beflockungsvorgangs, die bereichsweise auf der Rückseite des Flockwerkzeuges angesteuert werden können, und die offene Fläche verringern, bzw. die Luftströmung behindern (Fig. 2),
- Verstärkte Absaugung bestimmter Bereiche hinter dem Werkzeug um den Unterdruck zu steigern (Fig. 3),
- Gänzliches Verschließen bestimmter Bereiche des Werkzeuges, um dort kein Material abzuscheiden (Fig. 4),
- Variation der offenen Fläche des porösen Flockwerkzeugs durch unterschiedliche Lochbilder und Lochdurchmesser (Fig. 5).

Durch das sequenzielle, diskontinuierliche Flocken von unterschiedlichen Materialrezepturen können beispielsweise zwei- und Mehrlagenvlieshalbzeuge in der Flockbox hergestellt werden, wenn durch Erweiterung der Anlage in den Hauptförderluftstrom mehrere Materialströme zugeführt werden können. Einzelne Vliesschichten mit jeweils unterschiedlichen Eigenschaften können beispielsweise durch die Steuerung der Luftströmung wie zuvor beschrieben, vollflächig oder partiell ausgeführt werden, indem die poröse Form in bestimmten Bereichen des Flockwerkzeugs geblockt wird, um dort kein Material abzuscheiden.

Nach Legung der 3D Faservliesmatte **wird** diese beispielsweise durch Heißluft, die beispielsweise seitlich durch Heißluftkanäle in den Hauptluftstrom der Flockbox zugeführt werden kann, durchströmt und so mittels der in ihr enthaltenen thermoplastischen Bindefasern oder Bindepulver teilverfestigt werden. Anschließend wird dieses Halbzeug beispielsweise mit einer Rohseite und einer ausgeformten Seite (werkzeugseitig) in ein formgebendes Werkzeug zur Herstellung von Formteilen überführt.

Alternativ hierzu kann beispielsweise auf die Heißluftverfestigung im Flockwerkzeug verzichtet werden, wenn das Flockwerkzeug am Ende eines Roboterarms angebracht wird, und während des Transports in das formgebende Werkzeug weiter mit einem Unterdruck gehalten wird.

Das Halbzeug wird anschließend in ein dampf-/vakuumfähiges Werkzeug überführt. Dies Werkzeug wird dann zunächst luftentleert, und der thermoplastische Binder im Halbzeug mit Sattdampf thermisch aktiviert, um anschließend durch das Anlegen eines Vakuums wieder heruntergekühlt zu werden. Dabei ist es wichtig, dass das Dampf-Vakuum-Werkzeug eine Temperatur im Bereich der Sattdampftemperatur aufweist, um Kondensatbildung zu vermeiden.

Das Halbzeug wird beispielsweise je nach Bauteildichten in ein ebenfalls poröses formgebendes Werkzeug überführt, und dort mittels Heißluft ausgeformt, oder in einem temperierten Heißprägewerkzeug aus Vollmaterial verpresst.

Im letzten formgebenden Prozess wird das Formteil beispielsweise in einem gekühlten Werkzeug aus Vollmaterial in Endkontur ausgeformt.

Die Erfindung betrifft also beispielsweise ein Verfahren zum diskontinuierlichen Herstellen von 3-D Bauteilen, das eine Mischung von Fasern, PUR-Schaumflocken, und, oder anderen körnigen, oder auch pulverförmigen Komponenten umfasst, die über die Bauteildicke aus einer oder mehreren Schichten, und über die Fläche unterschiedliche Dicke, und definiert unterschiedliche Eigenschaften, wie Druckfestigkeit, Akustik, Steifigkeit oder Crashverhalten aufweisen kann, indem eine definierte Menge an Flockenmischung in einer definierten Zeit in einen geschlossenen Luftstromkreislauf eingebracht wird, deren Zusammensetzung über die Zeit konstant bleibt, sich kontinuierlich oder sprunghaft ändert, wobei ein poröses Werkzeug in einer entgegen der Schwerkraft gerichteten Strömung derart als Filter wirkt, dass die Fasermenge für jeden Bereich des Werkzeuges definiert gesteuert wird.

Das Werkzeug ist beispielsweise strömungstechnisch in Sektionen derart unterteilt, dass der Luftstrom für jede Sektion getrennt hinsichtlich Zeit und/oder der Intensität geregelt werden kann, so dass die abgeschiedene Materialmenge und die damit zusammenhängenden Eigenschaften in weiteren formgebenden Verfahrensschritten über Dicke und Dichte des Bauteils gezielt eingestellt werden können.

Vorteilhafterweise trägt man die Flocken über einen Trichter in den Abscheideraum ein, da die Flocken so besonders gleichmäßig und zielgerichtet in den Abscheideraum gelangen können.

Als Flockwerkzeug setzt man beispielsweise ein 3D-Lochblechwerkzeug, ein Gitterwerkzeug oder ein Werkzeug aus Gewebe ein.

Als Binder bläst man vorteilhafterweise thermoplastische Fasern, Pulver und/oder Granulat, insbesondere Fasern, in den Abscheideraum ein. Dadurch kann das Halbzeug besonders effizient zu einem Formteil verfestigt werden.

Vorteilhafterweise lässt man in einem nachfolgenden zweiten Schritt Heißluft in den Abscheideraum ein, um den Binder zu aktivieren, und so das Halbzeug zumindest teil zu verfestigen. Dies ist eine besonders kosteneffiziente Möglichkeit der Aktivierung des Binders.

Man kann die Dicke des Halbzeugs in verschiedenen Bereichen unterschiedlich einstellen Die Flocken werden von der Schwerkraft alle im Wesentlichen gleichermaßen beeinflusst, da sie entgegen der Schwerkraft gegen das Flockwerkzeug geblasen werden und nicht eigenständig auf das Werkzeug "fallen".

Durch die verschiedenen die Luftströmung beeinflussenden Maßnahmen wird das die Flocken tragende Transportmedium örtlich und/oder zeitlich beeinflusst und dadurch die Anzahl der Flocken und die Dicke des Halbzeugs in vordefinierten Werkzeugbereichen.
Anschließend überführt man das Halbzeug beispielsweise in das dampf-/vakuumfähige Werkzeug, dadurch, dass man während der Überführung einen Unterdruck zwischen Halbzeug und Flockwerkzeug einstellt und das so Halbzeug mitsamt Flockwerkzeug überführt.

Im dampf-/vakuumfähigen Werkzeug wird das Teil erwärmt, geformt, verfestigt und auf eine mittlere Temperatur abgekühlt.

In einem gekühlten Werkzeug wird anschließend das Teil auf die erforderliche Temperatur abgekühlt und gegebenenfalls nachgeformt, um durch die Handhabung bedingte Verformungen zu beseitigen.

Alternativ dazu überführt man das Halbzeug beispielsweise in ein poröses formgebendes Werkzeug und erwärmt es mittels eines heißen Luftstroms bis der Binder aktiviert ist und kühlt es mit einem kalten Luftstrom ab.

Man formt das Formteil beispielsweise in einem gekühlten Werkzeug aus Vollmaterial in Endkontur aus, wobei das fertige Bauteil entsteht.

## Patentansprüche

1. Verfahren zur Herstellung von Formteilen aus einem Halbzeug wobei man Flocken und Binder in einem Luftstrom entgegen der Schwerkraft in einen Abscheideraum einträgt und an einem luftdurchlässigen dreidimensionalen Flockwerkzeug abscheidet, **wobei** hinter dem Flockwerkzeug ein niedrigerer räumlich und/oder zeitlich variabler Luftdruck als vor dem Flockwerkzeug herrscht, der räumlich und/oder zeitlich variiert werden kann, wobei der niedrigere Luftdruck saugseitig durch hinter dem Werkzeug anliegenden Unterdruck erzeugt wird,
wobei man in einem nachfolgenden zweiten Schritt Heißluft in den Abscheideraum einlässt, um den Binder zu aktivieren, und so das Halbzeug zumindest teilverfestigt und
das Halbzeug in einem anschließenden Schritt in ein dampf-/vakuumfähiges Werkzeug überführt, dieses anschließend luftentleert, anschließend den Binder durch Einleitung von Sattdampf aktiviert, und daran anschließend zur Abkühlung des Halbzeugs Vakuum gezogen wird, wobei zu jedem Zeitpunkt das Werkzeug mindestens die Temperatur des Sattdampfes aufweist.

2. Verfahren gemäß Anspruch 1, **dadurch gekennzeichnet, dass** man Naturfaserflocken und/oder PU-Schaumflocken in den Abscheideraum einträgt.

3. Verfahren gemäß Anspruch 1 oder 2, **dadurch gekennzeichnet, dass** man als Binder Fasern, Pulver und/oder Granulat, insbesondere thermoplastische Fasern, in den Abscheideraum einbläst.

4. Verfahren gemäß Anspruch 1, **dadurch gekennzeichnet, dass** man die Dicke des Halbzeugs im Bereich von 2 bis 300 mm, insbesondere 7 bis 200 mm einstellt.

5. Verfahren gemäß Anspruch 1, **dadurch gekennzeichnet, dass** man die Dicke des Halbzeugs in Bereichen von 5 bis 5000 cm², insbesondere 50 bis 500 cm² segmentiert.

6. Verfahren gemäß Anspruch 1, **dadurch gekennzeichnet, dass** man die Dicke verschiedener Bereiche des Halbzeugs dadurch unterschiedlich einstellt.

7. Verfahren gemäß Anspruch 1, wobei man die Konturtiefe des Flockwerkzeugs anpasst.

8. Verfahren gemäß Anspruch 1, wobei man teilzeitig oder vollzeitig Drosselklappen während des Beflockungsvorgangs einsetzt, die bereichsweise auf der Rückseite des Flockwerkzeuges angesteuert werden können.

9. Verfahren gemäß Anspruch 1, wobei man bestimmte Bereiche hinter den Flockwerkzeug verstärkt absaugt um den Unterdruck zu steigern.

10. Verfahren gemäß Anspruch 1, wobei man bestimmte Bereiche des Flockwerkzeugs gänzlich verschließt, um dort kein Material abzuscheiden.

11. Verfahren nach Anspruch 1, wobei man die offene Fläche des Flockwerkzeugs durch unterschiedliche Lochbilder und/oder Lochdurchmesser variiert.

12. Verfahren nach Anspruch 1 **dadurch gekennzeichnet, dass** man das Halbzeug in ein poröses formgebendes Werkzeug überführt, und dort mittels Heißluft ausformt oder in einem temperierten Heißprägewerkzeug aus Vollmaterial verpresst.

13. Verfahren gemäß Anspruch 12, **dadurch gekennzeichnet, dass** man das Formteil in einem gekühlten Werkzeug aus Vollmaterial in Endkontur ausformt.

## Claims

1. A process for preparing molded parts from a semi-finished product, wherein flakes and a binder in an air stream are introduced into a deposition space against gravity and deposited on an air-permeable three-dimensional flocking tool, wherein a lower spatially and/or temporally variable air pressure prevails downstream of the flocking tool than upstream of the flocking tool and can be varied in space and time, wherein said lower air pressure is generated on the suction side by a reduced pressure applied downstream of the flocking tool;
wherein hot air is admitted into the deposition space in a subsequent second step to activate the binder, and thus the semi-finished product is solidified at least partially; and
the semi-finished product is transferred into a mold capable of steam and vacuum exposure in a subsequent step, the mold is subsequently evacuated, then the binder is activated by introducing saturated steam, followed by drawing a vacuum to cool the semi-finished product, wherein the mold has at least the temperature of the saturated steam at any time.

2. The process according to claim 1, **characterized in that** natural fiber flocks and/or PU foam flocks are introduced into the deposition space.

3. The process according to claim 1 or 2, **characterized in that** said binder blown into the deposition space includes fibers, powders and/or granules, especially thermoplastic fibers.

4. The process according to claim 1, **characterized in that** the thickness of the semi-finished product is set within a range of from 2 to 300 mm, especially from 7 to 200 mm.

5. The process according to claim 1, **characterized in that** the thickness of the semi-finished product is segmented into ranges from 5 to 5000 cm², especially from 50 to 500 cm².

6. The process according to claim 1, **characterized in that** the thickness of different regions of the semi-finished product is adjusted differently thereby.

7. The process according to claim 1, wherein the contour depth of the flocking tool is adapted.

8. The process according to claim 1, wherein throttle valves that can be controlled by regions on the back side of the flocking tool are employed during the flocking process on a part time or full time basis.

9. The process according to claim 1, wherein certain regions downstream of the flocking tool are subjected to enhanced suction to enhance the reduced pressure.

10. The process according to claim 1, wherein certain regions of the flocking tool are entirely closed in order that no material is deposited thereon.

11. The process according to claim 1, wherein the open area of the flocking tool is varied by different perforation patterns and/or perforation diameters.

12. The process according to claim 1, **characterized in that** said semi-finished product is transferred into a porous shaping tool and shaped therein by means of hot air, or pressed in a temperature-controlled hot stamping tool of solid material.

13. The process according to claim 12, **characterized in that** said molded part is shaped to final contour in a cooled tool of solid material.

## Revendications

1. Procédé pour la production de pièces moulées à partir d'un produit semi-fini, dans lequel des flocons et un liant dans un courant d'air sont introduits dans un espace de dépôt contre la force de gravité, et déposés sur un outil de flocage tridimensionnel perméable à l'air, dans lequel la pression d'air en aval de l'outil de flocage, qui peut être variée temporellement et spatialement, est plus basse que celle en amont de l'outil de flocage, dans lequel la pression d'air plus basse sur le côté aspiration est produite par une pression réduite exercée en aval de l'outil ;
dans lequel de l'air chaud est introduit dans l'espace de dépôt dans une deuxième étape, ultérieure, pour activer le liant, et ledit produit semi-fini est ainsi solidifié au moins partiellement ; et
dans une étape ultérieure, ledit produit semi-fini est transféré dans un outil capable d'utiliser de la vapeur et/ou un vide, ledit outil est ensuite évacué, le liant est ensuite activé par l'introduction de vapeur saturée, et ensuite un vide est produit pour le refroidissement dudit produit semi-fini, dans lequel la température dudit outil est au moins égale à la température de la vapeur saturée à tout moment.

2. Procédé selon la revendication 1, **caractérisé en ce que** des flocons de fibres naturelles et/ou des flocons de mousse de PU sont introduits dans ledit espace de dépôt.

3. Procédé selon la revendication 1 ou 2, **caractérisé en ce que** ledit liant soufflé dans l'espace de dépôt comprend des fibres, des poudres et/ou des granules, notamment des fibres thermoplastiques.

4. Procédé selon la revendication 1, **caractérisé en ce que** l'épaisseur dudit produit semi-fini est ajustée dans la gamme de 2 à 300 mm, notamment de 7 à 200 mm.

5. Procédé selon la revendication 1, **caractérisé en ce que** l'épaisseur dudit produit semi-fini est segmentée dans des gammes de 5 à 5000 cm², notamment de 50 à 500 cm².

6. Procédé selon la revendication 1, **caractérisé en ce que** l'épaisseur de régions différentes dudit produit semi-fini est ainsi ajustée différemment.

7. Procédé selon la revendication 1, dans lequel la profondeur de contour dudit outil de flocage est adaptée.

8. Procédé selon la revendication 1, dans lequel des soupapes d'étranglement, qui peuvent être actionnées selon des régions sur le côté arrière de l'outil de flocage, sont utilisés pendant le procédé de flocage à temps partiel ou à temps plein.

9. Procédé selon la revendication 1, dans lequel certaines régions en aval de l'outil de flocage sont soumises à une aspiration élevée pour améliorer la pression réduite.

10. Procédé selon la revendication 1, dans lequel certaines régions de l'outil de flocage sont fermées entièrement pour ne pas déposer du matériau dessus.

11. Procédé selon la revendication 1, dans lequel la surface ouverte de l'outil de flocage est variée par des motifs de perforation et/ou diamètres de perforation différents.

12. Procédé selon la revendication 1, **caractérisé en ce que** ledit produit semi-fini est transféré dans un dispositif de façonnage poreux, où il est façonné au moyen d'air chaud, ou compressé dans un dispositif de marquage à chaud à température contrôlée en matière solide.

13. Procédé selon la revendication 12, **caractérisé en ce que** ladite pièce moulée est façonnée en contour définitif dans un dispositif refroidi en matière solide.
